Europäisches Patentamt

European Patent Office

Office européen des brevets

(11) Publication number: **0 391 158**
**A2**

# (12) EUROPEAN PATENT APPLICATION

(21) Application number: **90105461.9**

(22) Date of filing: **22.03.90**

(51) Int. Cl.5: **C08J 9/30, A01G 13/02, C08K 5/10, //C08L1:26**

(30) Priority: **03.04.89 US 331743**

(43) Date of publication of application:
**10.10.90 Bulletin 90/41**

(84) Designated Contracting States:
**BE DE FR GB IT NL SE**

(71) Applicant: **AQUALON COMPANY**
**2711 Centerville Road Little Falls Centre One**
**Wilmington Delaware 19850-5417(US)**

(72) Inventor: **Banyai, Bruce Edward**
**11 Gates Circle**
**Hockessin, Delaware 19707(US)**
Inventor: **Desmarais, Armand Joseph**
**142 Rockrose Drive**
**Newark, Delaware 19711(US)**
Inventor: **Modi, Jashawant Jamanadas**
**57 Raphael Road**
**Hockessin, Delaware 19707(US)**

(74) Representative: **Lederer, Franz, Dr. et al**
**Lederer, Keller & Riederer, Patentanwälte,**
**Lucile-Grahn-Strasse 22**
**D-8000 München 80(DE)**

(54) **Stable biodegradable foam.**

(57) A stable biodegradable foam with a 5 to 200 expansion ratio combines water solutions of "A" sodium carboxymethylcellulose/surfactant and "B" aluminum acetate crosslinker just prior to mixing with air. A methyl parasept preservative may be added to the "A" solution.

EP 0 391 158 A2

## STABLE BIODEGRADABLE FOAM

The invention relates to foam compositions which can be sprayed on surfaces. In particular, the invention relates to a stable and biodegradable foam containing cellulose which provides greater utility for agriculture, mining, firefighting, etc.

Foams useful for spraying on surfaces are well known. Included in these are ones which employ a cellulose agent as a means of producing the foam. A problem with these prior art foams is that they are in some cases not biodegradable, and in all cases, they are not stable for more than a few hours.

For example, U.S. Patent 2,875,555 describes a method of shielding plants from frostation with a foam generated from a dilute aqueous solution of cellulose and saponin surfactant. In addition, U.S. Patents 2,514,310; 3,963,507; 4,594,167 and 4,442,018 all deal with foam production and application. Yet despite these references and other published information, it was not known how to formulate and/or apply a stable and biodegradable foam which would be of practical value for agriculture and industry.

A biodegradable foam comprises on a weight basis: a) 0.1 to 25% sodium carboxymethylcellulose having a molecular weight greater than 5000; b) 0.2 to 30% solid surfactant; c) .05 to 25% crosslinking agent for the cellulose; and d) 25 to 99% water; where the foam has an expansion ratio of 5 to 200.

A method for foam application comprises the steps: 1) preparing a solution of sodium carboxymethylcellulose, surfactant and water; 2) preparing a solution of crosslinking agent; 3) admixing the solutions prior to mixing with air in a foam generating apparatus; and 4) ejecting a foam with an expansion ratio of 5 to 200.

For the foam composition and method it is preferred to use an aluminum crosslinking agent and nonionic or anionic surfactant or wetting agent with sodium carboxymethylcellulose having a molecular weight above 5000. A sufactant solution is added to a cellulose solution.

The foam of the invention is useful for agricultural purposes of anticrusting, seed germination, insulating greeenhouses, frost protection, pesticide, fertilizer and herbicide delivery and field marking. Industrial uses include firefighting, top coating for landfills, vapor barrier for sewage plants and chemical spills and soil carrier during tunnel drilling.

The broad operative range for foam composition allows incorporating to 0.1 to 25% cellulose binding agent; 0.05 to 30% surfactant or wetting agent; 0.05 to 20% crosslinking agent for the cellulose binding agent; and 25 to 99% water, since entrapped air within the foam is not considered in the calculation, only solids and liquids make up the weight basis determination for the foam. Generally, higher molecular weight cellulosic polyner requires lower amounts of crosslinker than lower molecular weight cellulosic polymer in order to obtain foam with the same degree of stability. Larger amounts of a natural surfactant like saponin would be required than with sodium lauryl sulfate or a substituted fatty acid, while much smaller amounts of an extremely active fluorocarbon surfactant would be required. Variable amounts of water will be required depending upon the total foam formulation and the final stability of the foam desired. Preferred foam formulations which are stable for up to seven (7) days have an expansion ratio of 5 to 20 and comprise the following: 700,000 mol. wt. cellulose - 0.4 to 0.6%; surfactant or wetting agent - 0.5 to 1.0%; crosslinking agent - 0.1 to 0.20%; Water - 97 to 99%; Preservative -0.05 to 0.15%.

In practicing the method of the invention, it is possible to adapt to specific application requirements. For agricultural uses a portable apparatus is required, whereas for a manufacturing application it would be possible to employ fixed equipment. In any event, the portable or fixed equipment must have the capability to do the following: separately store the cellulose/surfactant solution and the crosslinking solution, mix the cellulose/surfactant solution and the crosslinking solution and discharge a crosslinked foam with improved stability. It is preferred to add a preservative to the cellulose/surfactant solution.

While the foam formulation for agricultural use is both stable and biodegradable, it is possible to simply employ the higher stability alone in industrial applications where such biodegradability is immaterial. Thus, where the foam is used in connection with fuels, such as coal or oil, or applications like firefighting, mining, drilling, odor and vapor suppression or control of toxic waste, then nonbiodegradable components could be employed in the foam or its production process.

One of the ways that foam has been used in agriculture has been as a field marker in connection with tilling, seeding and spraying of compositions such as fertilizer, herbicides and insecticides. Tor example, when an area has an active liquid applied, the area sprayed is marked with foam so that after turning the tractor the operator can line up to spray an adjacent strip by using the foam marker on the ground.

With foams which remain visible for only a few hours, it would be possible to rely on prior art field markers as long as no delays occurred due to weather or mechanical difficulties and the farming fields are small enough to finish work in a short time. However, it is often the case that field work which is started one day can not be completed until several days later. This is one of many areas in which a need has existed for a stable and biodegradable foam to meet practical needs.

It has been discovered that a biodegradable foam which is stable for several days can be produced with materials and means not previously known. A new and useful foam results when a cellulose agent with a molecular weight above 5000 is employed with water and surfactant in a solution and that a crosslinking agent solution is admixed just prior to expansion of the foam to its applied size ratio. It was indeed surprising to find that a sodium carboxymethlcellulose with a molecular weight above 5000 could serve such an advance, when previous attempts to improve foam efficiency by increasing molecular weight in the 1000 to 4000 range showed no advantage. That is to say, in tests of all of these lower molecular weight cellulose agents, there had never been any indication that it would be possible to do better than a few hours stability. It was also unexpected that in spite of what had been previously published, that the way in which the crosslinking agent was added was much more important than the use of any particular crosslinking agent.

The foam stability can be changed by changing any of the following to obtain desired stability: 1) reducing cellulose polymer and/or crosslinker concentration ; 2) changing ratio of solution A to solution B; 3) changing molecular weight of the cellulosic polmer, e.g., lower the molecular weight less stable the foam; 4) changing expansion ratio.

It is not necessary to have preservative in the formulation if the cellulosic polmer solution is used in a short time after preparing.

Cellulose agents useful for the invention include sodium carboxymethylcellulose with a molecular weight of 5,000 to 1,000,000 measured by the intrinsic viscosity method. These can be made by reacting alkali cellulose with sodium monochloroacetate. Carboxymethylcellulose (CMC) is a product available from Aqualon Company which is useful in the foam preparation. Other suppliers of possible similar cellulosics include Miles, Louisiana Chemicals and Carbose Corporation.

A wide range of surfactant/wetting agents can be used to prepare the cellulose solution. Either natural products such as saponin or synthetic products may be employed. In the case where the minimum amount of surfactant is desirable, it would be possible to employ a fluorocarbon compound. It is preferred to use an anionic agent such as sodium lauryl sulfate or a nonionic Triton$^R$X100 available from Rohm & Haas.

Aluminum compounds such as aluminum acetate have given the best foams tested so far. A preferred compound is aluminum acetate available from Niacet Corporation as Niaproof.

Foaming apparatus is commercially available, or equipment which can be modified is available in order to practice the present invention. This apparatus or equipment must have a mixing chamber wherein the foam can be produced along with a means such as injection for admixture of a solution of crosslinking agent with the cellulose solution. Such a piece of equipment is the Model 4000 MicroFoam Generator available from DeTer Company, Inc., Box S, Burgin, Kentucky 40310. A method covering the use of such equipment is found in U.S. Patent 4,400,220. Other generators available from this company will also make a similar foam, i.e., the 2000, 4000, and 6,000 series models.

The term expansion ratio as used in this application in reference to the foam means:

$$\frac{\text{Weight of the unit volume of liquid}}{\text{Weight of the same volume of foam}}$$

The term biodegradable is intended to mean that after the foam is applied in an agricultural application, that the foam will be converted by a natural environment into byproducts and residues which will not inhibit further agricultural use of the land to which the foam was initially applied.

The invention has applicability for both Industry and Agriculture. The foam is both stable and biodegradeable.

The following example serves to illustrate the practice of the invention.

Example 1

A water solution "A" was prepared by mixing a solution of sodium carboxymethylcellulose (molecular weight about 700,000) and methyl parasept with a solution of sodium lauryl sulfate to give a final solids content of 0.55% by weight sodium carboxymethylcellulose and 0.90 % by weight surfactant and 0.14 methyl parasept preservative..

A crosslinking solution "B" was prepared by diluting a 10% by weight water solution of Niaproof[R] - (aluminum acetate available from Niacet Corporation) to 0.8%.

A Model 4000 microfoam Generator was preset to deliver 3-4 cubic feet per minute foam of the consistency of shaving cream. The equipment was preflushed with water to remove extraneous compositions.

The liquid control valve and foam spraying nozzle were closed and the air compressor was turned on. When the air pressure reached 25 psi as indicated by the air pressure gauge, the liquid control valve was opened so that the carboxymethylcellulose/surfactant/preservative "A" solution in a tank connected by a plastic hose could be suctioned toward a foam mixing chamber. Once the foam gave the appearance of shaving cream, the inlet valve was opened to allow suctioning the crosslinker solution "B" to admix with the "A" solution. The crosslinker valve was preset to deliver a 80:20 (AS) weight ratio.

A tractor propelled the foam generating apparatus over tomato seeds, providing a 2 to 4 inch thick foam cover.

After 7 days it was observed that a protective coating was still provided over the seeded area.

As control experiments tomato seeds were planted with no treatment, water spray only, or with a commercial spray aid intended to help seed germination.

Table 1 contains comparative results on the effectiveness of the foam of the invention in aiding seed germination and fruit yield.

TABLE 1

| Treatment | Plant Stands After | | | Fruit Yield | Ave. Fruit |
|---|---|---|---|---|---|
| | 10 | 15 | 20 | | |
| | (days) | | | (ton, acre) | (weight, oz) |
| None dry | 24 | 63 | 102 | 14.3 | 4.74 |
| Water Only | 25 | 53 | 85 | 13.1 | 4.80 |
| Commercial Aid | 25 | 71 | 94 | 13.1 | 4.66 |
| Invention | 52 | 126 | 149 | 15.6 | 4.83 |

From the table it can be seen that after 10 days seed coated with foam had very high germination (plant stands), a more than 100% improvement over controls. The foam of the invention not only provided faster but also more uniform germination. This means crops not only can be harvested earlier but also in a narrow time period. This give farmers more time to plan for next crop. The foam ranked highest in the fruit yield/acre and average fruit weight, i.e., the tomatoes were larger than obtained with any other treatment.

It was observed that the foam was still visible seven days after the application and residue of the foam was still present 14 days after the application. It was observed that the soil moisture was 30% higher under the foam compared to the other treatments and soil did not show any sign of crusting.

## Claims

1. A biodegradable foam comprising on a weight basis: a) 0.1 to 25% sodium carboxymethylcellulose having a molecular weight greater than 5000; b) 0.2 to 30 % solid surfactant; c) .05 to 25 % crosslinking agent for the cellulose; and d) 25 to 99 % water; where the foam has an expansion ratio of 5 to 200.

2. The foam of claim 1 where the crosslinking agent is an aluminum compound.

3. The foam of claim 2 where the aluminum compound is aluminum acetate.

4. The foam of claim 1 further comprising a preservative.

5. The foam of claim 4 where the preservative is methyl parasept.

6. A method for foam application comprising the steps: 1) preparing a solution of sodium carboxymethylcellulose, surfactant and water; 2) preparing a solution of crosslinking agent; 3) admixing the solutions prior to mixing with air in a foam generating apparatus; and 4) ejecting a foam with an expansion ratio of 5 to 200.

7. The method of claim 6 where the expansion ratio is 5 to 20.

8. The method of claim 7 where in step (1) sodium carboxymethylcellulose is first dissolved in water before addition of surfactant.

9. A foam for agricultural purposes comprising on a weight basis: 700,000 mol-wt-cellulose - 0.4 to 0.6%; Surfactant or wetting agent - 0.5 to 1.0%; Crosslinking agent - 0.1 to 0.20%; Water - 97 to 99%; Preservative -0.05 to 0.15%.

10. The foam of Claim 9 where the crosslinking agent is aluminum acetate.

11. The foam of Claim 10 where the preservative is methyl parasept.